(19) Europäisches Patentamt
European Patent Office
Office européen des brevets

(11) Veröffentlichungsnummer: **0 319 845 B1**

(12) **EUROPÄISCHE PATENTSCHRIFT**

(45) Veröffentlichungstag der Patentschrift: **24.03.93**

(51) Int. Cl.$^5$: **C09B 62/09**, C09B 62/513, D06P 1/38

(21) Anmeldenummer: **88120055.4**

(22) Anmeldetag: **01.12.88**

Die Akte enthält technische Angaben, die nach dem Eingang der Anmeldung eingereicht wurden und die nicht in dieser Patentschrift enthalten sind.

# (54) Wasserlösliche Disazoverbindungen, Verfahren zu ihrer Herstellung und ihre Verwendung als Farbstoffe.

(30) Priorität: **08.12.87 DE 3741508**

(43) Veröffentlichungstag der Anmeldung:
**14.06.89 Patentblatt 89/24**

(45) Bekanntmachung des Hinweises auf die Patenterteilung:
**24.03.93 Patentblatt 93/12**

(84) Benannte Vertragsstaaten:
**BE CH DE ES FR GB IT LI**

(56) Entgegenhaltungen:
**EP-A- 0 042 108**
**EP-A- 0 167 858**
**EP-A- 0 202 570**

**CHEMICAL ABSTRACTS, Band 95, Nr. 1, Juli 1981, Seite 82, Zusammenfassung Nr. 8801u, Columbus, Ohio, US; CS-A-184 466 (J. JARKOVSKY et al.) 15-07-1980**

(73) Patentinhaber: **HOECHST AKTIENGESELLSCHAFT**
**Postfach 80 03 20**
**W-6230 Frankfurt am Main 80(DE)**

(72) Erfinder: **Büch, Holger Michael, Dr.**
**Neugasse 4**
**W-6238 Hofheim am Taunus(DE)**

EP 0 319 845 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Azofarbstoffe.

Aus der europäischen Patentanmeldungs-Veröffentlichung Nr. 0 202 570 ( = Deutsche Offenlegungsschrift Nr. 35 17 366) und aus Chemical Abstracts, Band 95, Referat-Nr. 8801u, sind N-(Dichlor-s-triazinyl)-phenylazonaphthylazonaphthyl-amino-Verbindungen bekannt, die Färbungen mit brauner Nuance liefern.

Mit der vorliegenden Erfindung wurden nunmehr neue wertvolle Disazoverbindungen entsprechend der allgemeinen Formel (1)

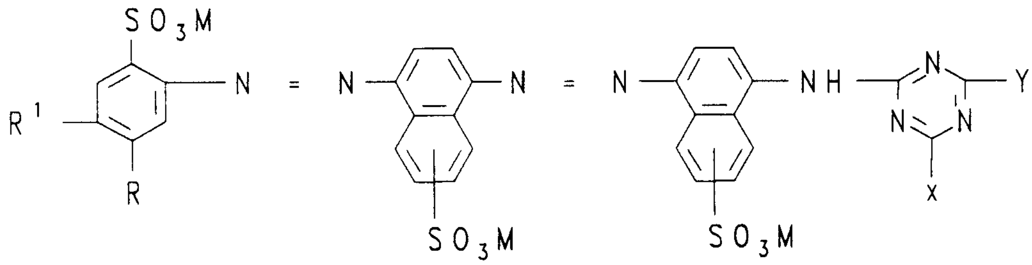
(1)

gefunden, die sehr gute faserreaktive Farbstoffeigenschaften besitzen und den für die Verwendung in der Trichromiefärbung erwünschten rotstichigen Braunton besitzen.

In dieser Formel (1) bedeuten:

R ist ein Wasserstoffatom oder eine Sulfogruppe;
$R^1$ ist die Hydroxygruppe, die Methoxygruppe oder die Ethoxygruppe, bevorzugt die Methoxygruppe;
M ist ein Wasserstoffatom oder ein Alkalimetall, wie Natrium, Kalium oder Lithium;
X ist ein Chloratom oder ein Fluoratom, bevorzugt ein Chloratom;
Y ist ein Chloratom oder Fluoratom, bevorzugt Chloratom.

Bevorzugt sind insbesondere Disazoverbindungen der allgemeinen Formel (1), in welcher X und Y beide für ein Chloratom stehen, $R^1$ die Methoxygruppe bedeutet und R ein Wasserstoffatom ist.

In den vorstehenden wie in den nachstehenden Angaben bedeutet eine Sulfogruppe eine Gruppe der allgemeinen Formel $-SO_3M$ , in welcher M eine der obengenannten Bedeutungen besitzt.

Die erfindungsgemäßen Disazoverbindungen können in Form ihrer freien Säure und bevorzugt in Form ihrer Salze, insbesondere neutralen Salze, wie der Alkalimetallsalze, vorliegen. Die Disazoverbindungen der allgemeinen Formel (1) finden bevorzugt in Form dieser Salze ihre Verwendung zum Färben und Bedrucken von hydroxy- und/oder carbonamidgruppenhaltigem Fasermaterial.

Die vorliegende Erfindung betrifft weiterhin ein Verfahren zur Herstellung der erfindungsgemäßen Disazoverbindungen, das dadurch gekennzeichnet ist, daß man eine Amino-Disazoverbindung der allgemeinen Formel (3)

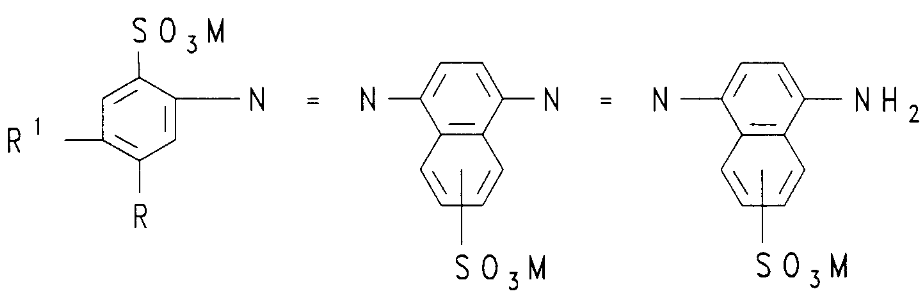
(3)

in welcher R, $R^1$ und M die obengenannten Bedeutungen besitzen, die in an und für sich üblicher und bekannter Weise durch Diazotierung und Kupplung der entsprechenden Komponenten hergestellt werden kann, mit einer Halogentriazin-Verbindung der allgemeinen Formel (4)

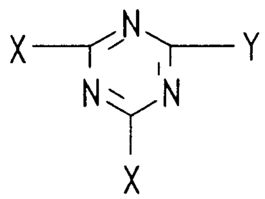

(4)

in welcher X und Y die obengenannten Bedeutungen haben, unter Abspaltung eines Mols Halogenwasserstoff umsetzt.

Die erfindungsgemäße Umsetzung einer Verbindung der allgemeinen Formel (3) mit einer Verbindung der allgemeinen Formel (4) kann in wäßrig-organischem Medium durchgeführt werden, bevorzugt erfolgt sie in wäßriger Lösung bzw. Suspension. Die Reaktionstemperatur liegt in der Regel zwischen 0 und 50 °C, bevorzugt zwischen 25 und 45 °C, insbesondere zwischen 35 und 40 °C. In der Regel wird ein pH-Wert zwischen 4 und 8, bevorzugt zwischen 5 und 7, eingehalten. Im Falle, daß die Verbindung der Formel (4) Cyanurchlorid oder Cyanurfluorid ist, d.h. in dieser Formel X und Y jeweils Chlor oder Fluor bedeuten, erfolgt die Umsetzung bevorzugt in wäßriger Suspension oder in einem wäßrig-organischen Medium (wobei der organische Lösemittelanteil bspw. Aceton, Dimethylformamid, Dioxan oder Dimethylsulfoxid ist), bei einer Temperatur zwischen -10 °C und +30 °C, vorzugsweise zwischen +5 und +15 °C, und einem pH-Wert zwischen 4 und 6.

Wie bereits erwähnt, erhält man die Ausgangsverbindungen der allgemeinen Formel (3) in üblicher Weise durch Diazotierung und Kupplungsreaktion. Diazokomponenten, die nach deren Diazotierung auf eine Sulfo-1-amino-naphthalin-Verbindung gekuppelt werden, sind beispielsweise 2-Sulfo-4-methoxy-anilin, 2-Sulfo-4-ethoxy-anilin und 2,5-Disulfo-4-methoxy-anilin. Die sowohl kupplungsfähigen als auch diazotierfähigen Sulfo-1-aminonaphthalin-Komponenten als Ausgangsverbindungen der allgemeinen Formel (3) sind beispielsweise 6-Sulfo-1-amino-naphthalin und 7-Sulfo-1-amino-naphthalin oder Gemische der beiden letztgenannten Verbindungen. Diese Diazo- und Kupplungskomponenten sind ausnahmslos bekannt.

Die Abscheidung und Isolierung der erfindungsgemäß hergestellten Disazoverbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei der Syntheselösung eine Puffersubstanz zugefügt werden kann.

Die erfindungsgemäßen Disazoverbindungen der allgemeinen Formel (1) - im nachfolgenden Verbindungen (1) genannt - haben, wie bereits erwähnt, faserreaktive Farbstoffeigenschaften. Sie können deshalb zum Färben (einschließlich Bedrucken) von hydroxygruppenhaltigen und/oder carbonamidgruppenhaltigen Fasermaterialien verwendet werden. Auch können die bei der Synthese der Verbindungen (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen (1) zum Färben (einschließlich Bedrucken) von hydroxy- und/oder carbonamidgruppenhaltigen Fasermaterialien bzw. Verfahren zu deren Anwendung auf diesen Substraten. Bevorzugt werden die Materialien in Form von Textilfasern, wie Garnen, Wickelkörpern und Geweben eingesetzt. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane in Form von Fasern, beispielsweise Wolle und andere Tierhaare, Seide, Leder, Polyamid-6,6, Polyamid-6, Polyamid-11 und Polyamid-4.

Die Verbindungen lassen sich, gemäß der erfindungsgemäßen Anwendung, auf den genannten Substraten nach den für wasserlösliche Farbstoffe, insbesondere faserreaktive Farbstoffe, bekannten Anwendungstechniken applizieren und fixieren, so beispielsweise, indem man die Verbindung (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind sowohl in der Fachliteratur als auch in der Patentliteratur zahlreich beschrieben, wie beispielsweise in den Europäischen Patentanmeldungs-Veröffentlichungen Nrs. 0 078 009 A und 0 181 585A.

Mit den Verbindungen (1) werden sowohl auf carbonamidgruppenhaltigen Materialien, wie insbesondere auf Wolle, als auch auf hydroxygruppenhaltigem Material, wie insbesondere Cellulosefasermaterial, braune, insbesondere rotstichig braune, Färbungen und Drucke mit hoher Farbausbeute und gutem Farbaufbau bei sehr geringer Temperatur- und Alkaliabhängigkeit. Die Färbungen und Drucke besitzen gute Echtheitseigenschaften, wie gute Licht- und Naßechtheitseigenschaften, wie gute Naßlichtechtheiten des mit Trinkwasser oder einer sauren oder alkalischen Schweißlösung befeuchteten gefärbten Materials, des weiteren eine gute Plissierechtheit, Bügelechtheit und Reibechtheit.

Von den Färbungen und Drucken auf carbonamidgruppenhaltigem Material, wie insbesondere auf Wolle, können die Licht-, Wasch- und Naßlichtechtheiten hervorgehoben werden, selbst wenn auf eine ansonsten übliche ammoniakalische Nachbehandlung der gefärbten Ware verzichtet wird. Ebenso läßt sich Material aus Wollfasern unterschiedlicher Provinienz mit den erfindungsgemäßen Azoverbindungen egal färben, wobei gegebenenfalls zur Verbesserung des Egalisierverhaltens ein übliches Egalisierhilfsmittel, wie beispielsweise N-Methyl-taurin zugesetzt werden kann.

Bevorzugt dienen die Verbindungen (1) zum Färben von Cellulosefasermaterialien. Von den hierauf erzielbaren guten Echtheitseigenschaften sind insbesondere die guten Waschechtheiten bei 60 bis 95 °C, auch in Gegenwart von Perboraten, die sauren und alkalischen Walk-, Überfärbe-und Schweißechtheiten, die hohe Dämpfbeständigkeit, die guten Alkali-, Säure-, Wasser- und Seewasserechtheiten und die gute Säurelagerbeständigkeit ("acid fading") beim Lagern von feuchtem, säurehaltigem, gefärbtem Material (s. deutsche Auslegeschrift 2 322 236, Spalte 4, Zeilen 35 bis 42).

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die synthese eingesetzt werden.
Die im sichtbaren Bereich angegebenen Absorptionsmaxima ($\lambda_{max}$-Werte) wurden aus wäßriger Lösung der Alkalimetallsalze bestimmt.

**Beispiel 1**

213 Teile 4-Methoxy-aminobenzol-3-sulfonsäure werden in 1000 Teilen Wasser mineralsauer diazotiert; 223 Teile 1-Amino-naphthalin-6-sulfonsäure werden hinzugegeben, und die Kupplungsreaktion wird bei einem pH-Wert zwischen 4 und 5 und einer Temperatur zwischen 5 und 15 °C durchgeführt. Die erhaltene Amino-Azoverbindung wird sodann in üblicher Weise mineralsauer diazotiert, und weitere 223 Teile 1-Amino-naphthalin-6-sulfonsäure werden zu dem Ansatz gegeben und die zweite Kupplungsreaktion gemäß den obigen Bedingungen durchgeführt. Die erhaltene Disazoverbindung wird durch Aussalzen mit Natriumchlorid isoliert und anschließend in eine feinverteilte Suspension von 194 Teilen Cyanurchlorid in 1000 Teilen Eiswasser eingetragen. Die Acylierungsreaktion erfolgt bei einem pH-Wert von 5 und bei einer Temperatur zwischen 5 und 20 °C. Nach Beendigung der Reaktion (kein Nachweis von freien Aminogruppen) werden zur Klärung der erhaltenen Syntheselösung 20 Teile Kieselgur hinzugegeben und die Lösung bei 40 bis 50 °C filtriert.

Die erfindungsgemäße Disazoverbindung kann, gegebenenfalls unter Zugabe einer Puffersubstanz, durch Aussalzen mit Kaliumchlorid, Filtration und Trocknen oder durch Sprühtrocknung isoliert werden. Man erhält ein elektrolytsalzhaltiges (vorwiegend Kaliumchlorid-haltiges) Pulver des erfindungsgemäßen Alkalimetallsalzes, vorwiegend Kaliumsalzes, der Verbindung der Formel

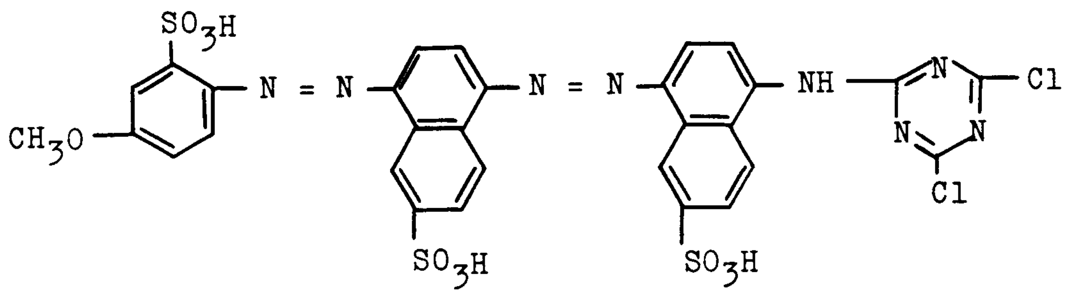

($\lambda_{max}$ = 451 nm).

Diese Disazoverbindung besitzt sehr gute Farbstoffeigenschaften und liefert auf den in der Beschreibung genannten Materialien, insbesondere Cellulosefasermaterialien, wie Baumwolle, nach den in der Technik für Farbstoffe, insbesondere für faserreaktive Farbstoffe, üblichen Applikations- und Fixiermethoden und weitgehend unabhängig von der gewählten Temperatur und Alkalimenge farbstarke, rotstichig braune Färbungen und Drucke, die gute Echtheiten, insbesondere eine hohe Lichtechtheit und hohe Naßlichtechtheiten des mit Trinkwasser oder einer sauren oder alkalischen Schweißlösung befeuchteten gefärbten Materials aufweisen.

Beispiele 2 und 3

In den nachfolgenden Tabellenbeispielen sind weitere erfindungsgemäße Disazoverbindungen mit Hilfe der Formelreste einer allgemeinen Formel (A)

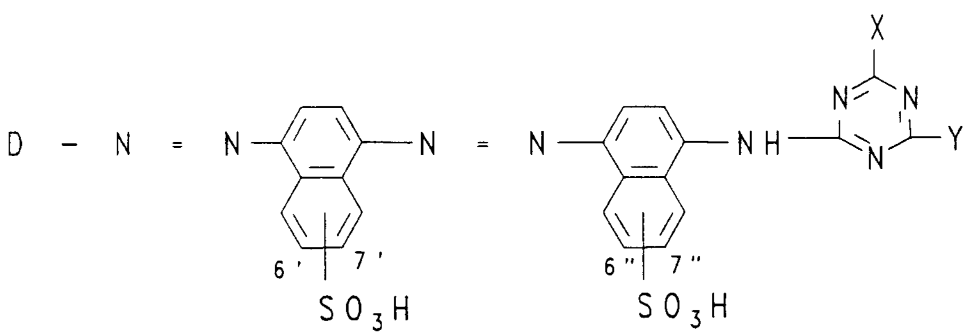

(A)

beschrieben. Sie lassen sich in erfindungsgemäßer Weise, beispielsweise analog dem obigen Ausführungsbeispiel, aus den aus der Formel (A) ersichtlichen Komponenten herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden farbstarke Färbungen und Drucke mit guten Echtheitseigenschaften in dem in dem jeweiligen Tabellenbeispiel angegebenen Farbton auf Baumwolle.

| Bsp. | Rest D | Sulfogruppe in ...-Stellg. | Sulfogruppe in ...-Stellg. | Rest X | Rest Y | Farbton |
|---|---|---|---|---|---|---|
| 2 | 2-Sulfo-4-methoxy-phenyl | 7′- | 7″- | Chlor | Chlor | rotstichig braun |
| 3 | 2-Sulfo-4-hydroxy-phenyl | 6′- | 6″- | Chlor | Chlor | rotstichig braun |

**Patentansprüche**
**Patentansprüche für folgende Vertragsstaaten : BE, CH, DE, FR, GB, IT, LI**

1. Eine Disazoverbindung entsprechend der allgemeinen Formel (1)

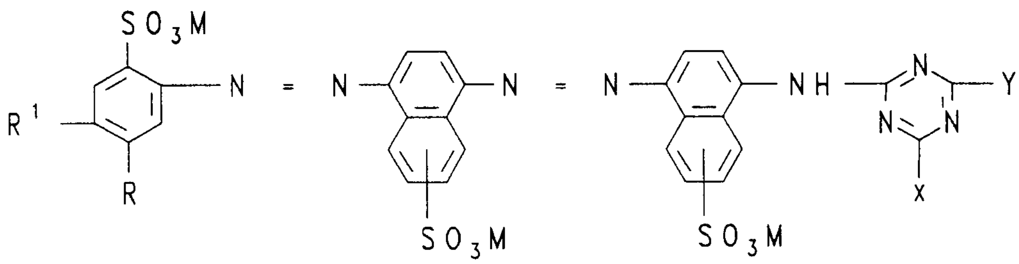

(1)

in welcher bedeuten:
R ist ein Wasserstoffatom oder eine Sulfogruppe;
$R^1$ ist die Hydroxygruppe, die Methoxygruppe oder die Ethoxygruppe;
M ist ein Wasserstoffatom oder ein Alkalimetall;
X ist ein Chloratom oder ein Fluoratom;
Y ist ein Chloratom oder Fluoratom.

2. Disazoverbindung nach Anspruch 1, dadurch gekennzeichnet, daß X und Y beide ein Chloratom sind.

3. Disazoverbindung nach Anspruch 1 oder 2, dadurch gekennzeichnet, daß $R^1$ die Methoxygruppe ist.

4. Disazoverbindung nach mindestens einem der Ansprüche 1 bis 3, dadurch gekennzeichnet, daß R ein Wasserstoffatom ist.

5. Verbindung nach Anspruch 1, dadurch gekennzeichnet, daß $R^1$ die Methoxygruppe ist, R ein Wasserstoffatom bedeutet und X und Y beide für ein Chloratom stehen.

6. Verfahren zur Herstellung einer Disazoverbindung von Anspruch 1, dadurch gekennzeichnet, daß man eine Amino-Disazoverbindung der allgemeinen Formel (3)

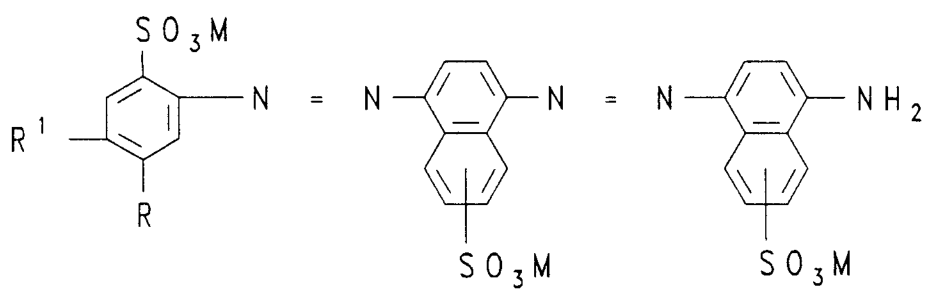

(3)

in welcher R, $R^1$ und M die in Anspruch 1 genannten Bedeutungen haben, mit einer Halogentriazin-Verbindung der allgemeinen Formel (4)

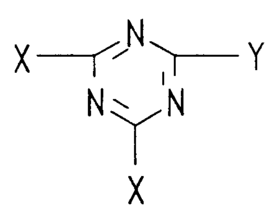

(4)

in welcher X und Y die in Anspruch 1 genannten Bedeutungen haben, unter Abspaltung eines Mols

Halogenwasserstoff umsetzt.

**7.** Verwendung einer Verbindung entsprechend der Formel (1) gemäß einem oder mehreren der Ansprüche 1 bis 6 zum Färben von hydroxy- und/oder carbonamidgruppenhaltigem Fasermaterial.

**8.** Verfahren zum Färben von hydroxy- und/oder carbonamidgruppenhaltigem Fasermaterial, bei welchem man einen Farbstoff auf das Material aufbringt und ihn mittels Wärme und/oder mittels einer säurebindenden Verbindung fixiert, dadurch gekennzeichnet, daß man als Farbstoff eine Verbindung entsprechend der Formel (1) gemäß einem oder mehreren der Ansprüche 1 bis 6 einsetzt.

**Patentansprüche für folgenden Vertragsstaat : ES**

**1.** Verfahren zur Herstellung einer Disazoverbindung entsprechend der allgemeinen Formel (1)

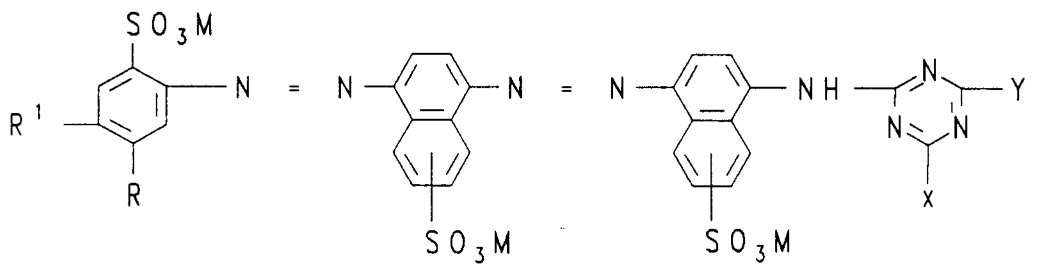

(1)

in welcher bedeuten:

R ist ein Wasserstoffatom oder eine Sulfogruppe;
$R^1$ ist die Hydroxygruppe, die Methoxygruppe oder die Ethoxygruppe;
M ist ein Wasserstoffatom oder ein Alkalimetall;
X ist ein Chloratom oder ein Fluoratom;
Y ist ein Chloratom oder Fluoratom,

dadurch gekennzeichnet, daß man eine Amino-Disazoverbindung der allgemeinen Formel (3)

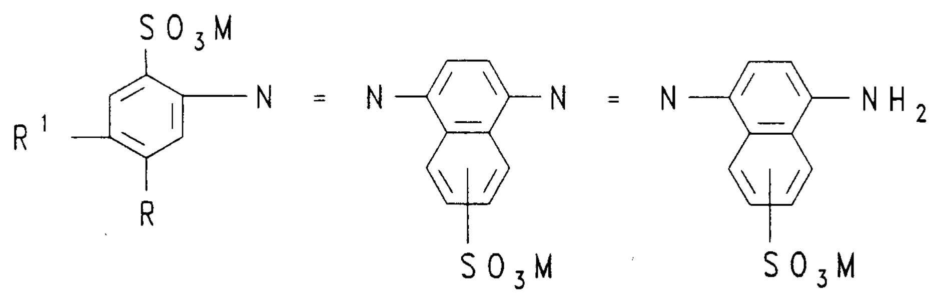

(3)

in welcher R, $R^1$ und M die oben genannten Bedeutungen haben, mit einer Halogentriazin-Verbindung der allgemeinen Formel (4)

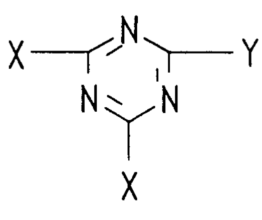

(4)

in welcher X und Y die oben genannten Bedeutungen haben, unter Abspaltung eines Mols Halogenwasserstoff umsetzt.

**2.** Verfahren nach Anspruch 1, dadurch gekennzeichnet, daß X und Y beide ein Chloratom sind.

**3.** Verfahren nach Anspruch 1 oder 2, dadurch gekennzeichnet, daß $R^1$ die Methoxygruppe ist.

**4.** Verfahren nach mindestens einem der Ansprüche 1 bis 3, dadurch gekennzeichnet, daß R ein Wasserstoffatom ist.

**5.** Verfahren zum Färben von hydroxy- und/oder carbonamidgruppenhaltigem Fasermaterial, bei welchem man einen Farbstoff auf das Material aufbringt und ihn mittels Wärme und/oder mittels einer säurebindenden Verbindung fixiert, dadurch gekennzeichnet, daß man als Farbstoff eine Verbindung entsprechend der Formel (1) gemäß einem oder mehreren der Ansprüche 1 bis 4 einsetzt.

**Claims**
**Claims for the following Contracting States : BE, CH, DE, FR, GB, IT, LI**

**1.** A disazo compound conforming to the general formula (1)

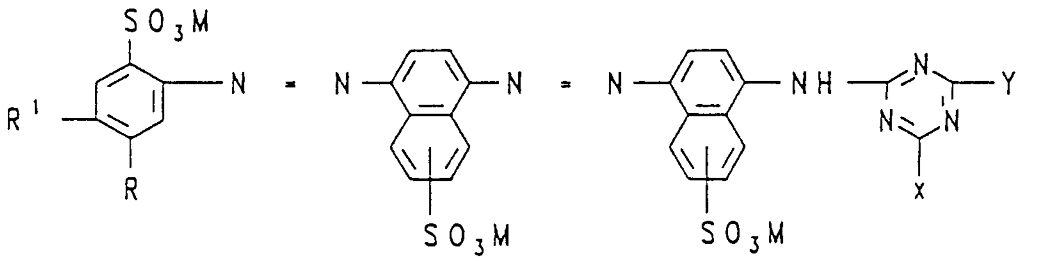

(1)

where

R is a hydrogen atom or a sulfo group,
$R^1$ is a hydroxyl group, a methoxy group or an ethoxy group,
M is a hydrogen atom or an alkali metal,
X is a chlorine atom or a fluorine atom, and
Y is a chlorine atom or a fluorine atom.

**2.** A disazo compound as claimed in claim 1, wherein X and Y are each a chlorine atom.

**3.** A disazo compound as claimed in claim 1 or 2, wherein $R^1$ is a methoxy group.

**4.** A disazo compound as claimed in at least one of claims 1 to 3, wherein R is a hydrogen atom.

**5.** A compound as claimed in claim 1, wherein $R^1$ is a methoxy group, R is a hydrogen atom and X and Y are each a chlorine atom.

**6.** A process for preparing a disazo compound of claim 1, which comprises reacting an amino-disazo compound of the general formula (3)

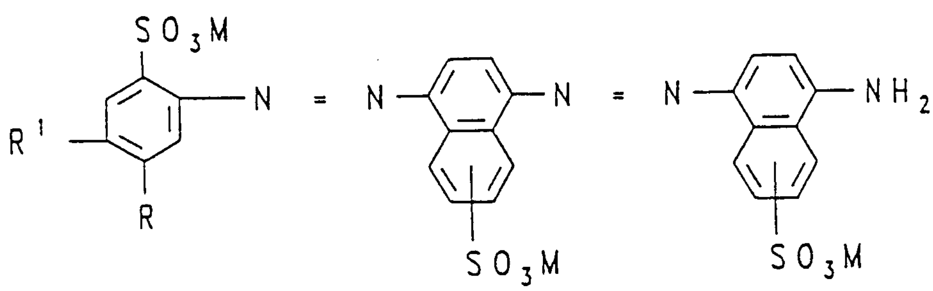

(3)

where R, $R^1$ and M are as defined in claim 1, with a halotriazine compound of the general formula (4)

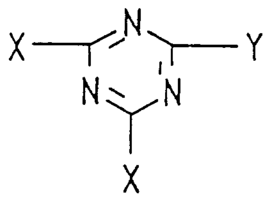

(4)

where X and Y are as defined in claim 1, with elimination of one mole of hydrogen halide.

**7.** The use of a compound conforming to the formula (1) as claimed in one or more of claims 1 to 6, for dyeing hydroxyl- and/or carboxamido-containing fiber material.

**8.** A process for dyeing hydroxyl- and/or carboxamido-containing fiber material by applying a dye to the material and fixing it by means of heat and/or by means of an acid-binding compound, which comprises using as the dye a compound conforming to the formula (1) as claimed in one or more of claims 1 to 6.

**Claims for the following Contracting State : ES**

**1.** A process for preparing a disazo compound conforming to the general formula (1)

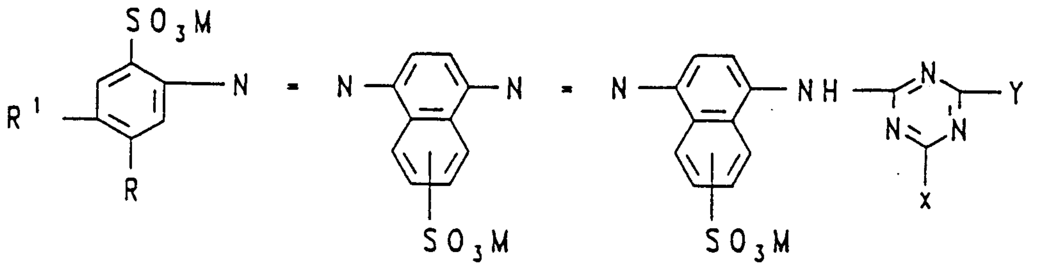

(1)

where

- R is a hydrogen atom or a sulfo group,
- $R^1$ is a hydroxyl group, a methoxy group or an ethoxy group,
- M is a hydrogen atom or an alkali metal,
- X is a chlorine atom or a fluorine atom, and
- Y is a chlorine atom or a fluorine atom,

which comprises reacting an amino-disazo compound of the general formula (3)

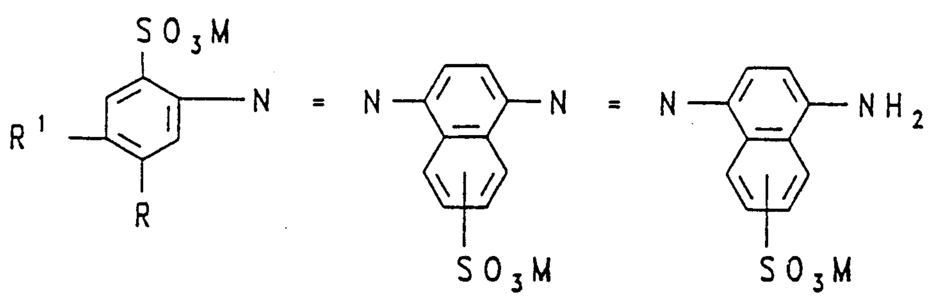

(3)

where R, $R^1$ and M are as defined above, with a halotriazine compound of the general formula (4)

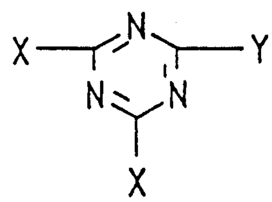

(4)

where X and Y are as defined above, with elimination of one mole of hydrogen halide.

2. A process as claimed in claim 1, wherein X and Y are each a chlorine atom.

3. A process as claimed in claim 1 or 2, wherein $R^1$ is a methoxy group.

4. A process as claimed in at least one of claims 1 to 3, wherein R is a hydrogen atom.

5. A process for dyeing hydroxyl- and/or carboxamido-containing fiber material by applying a dye to the material and fixing it by means of heat and/or by means of an acid-binding compound, which comprises using as the dye a compound conforming to the formula (1) prepared as claimed in one or more of claims 1 to 4.

**Revendications**
**Revendications pour les Etats contractants suivants : BE, CH, DE, FR, GB, IT, LI**

1. Composé disazoïque répondant à la formule générale (1)

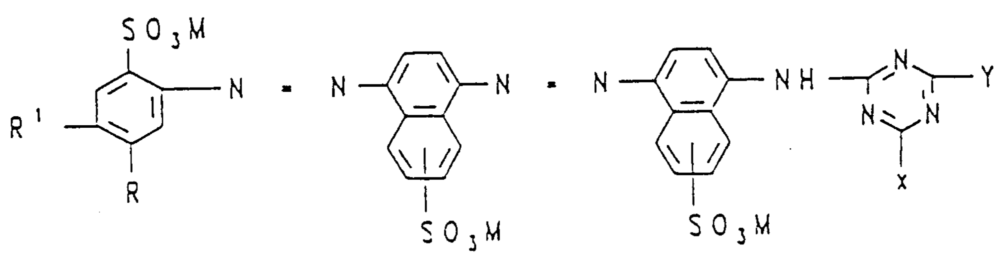

(1)

dans laquelle
R représente un atome d'hydrogène ou un groupe sulfo;
$R^1$ représente le groupe hydroxyle, le groupe méthoxy ou le groupe éthoxy;
M représente un atome d'hydrogène ou un métal alcalin;
X représente un atome de chlore ou un atome de fluor;
Y représente un atome de chlore ou un atome de fluor.

2. Composé disazoïque selon la revendication 1, caractérisé en ce que X et Y représentent chacun un atome de chlore.

3. Composé disazoïque selon la revendication 1 ou 2, caractérisé en ce que $R^1$ représente le groupe méthoxy.

4. Composé disazoïque selon l'une au moins des revendications 1 à 3, caractérisé en ce que R représente un atome d'hydrogène.

5. Composé selon la revendication 1, caractérisé en ce que $R^1$ représente le groupe méthoxy, R représente un atome d'hydrogène et X et Y représentent chacun un atome de chlore.

6. Procédé pour préparer un composé disazoïque selon la revendication 1, caractérisé en ce qu'on fait réagir un composé amino-disazoïque de formule générale (3)

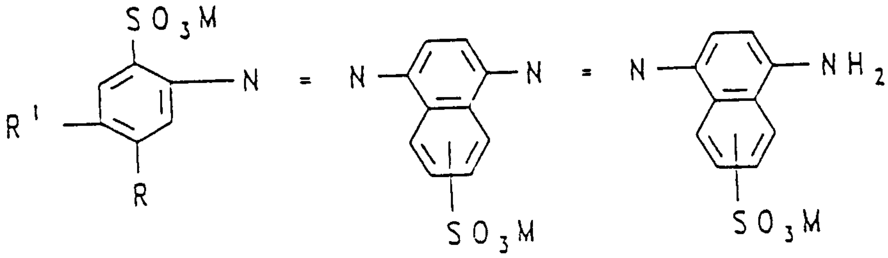

(3)

(dans laquelle R, $R^1$ et M ont le sens indiqué à la revendication 1) avec une halogéno-triazine de formule générale (4)

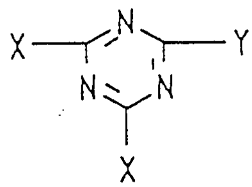

(4)

(dans laquelle X et Y ont les sens indiqués à la revendication 1), avec séparation d'une mole d'un halogénure d'hydrogène.

**7.** Utilisation d'un composé répondant à la formule (1), selon une ou plusieurs des revendications 1 à 6, pour teindre de la matière fibreuse contenant des groupes hydroxy et/ou carboxamide.

**8.** Procédé pour teindre de la matière fibreuse contenant des groupes hydroxy et/ou carboxamide, selon lequel on applique un colorant sur la matière et on l'y fixe à l'aide de la chaleur et/ou à l'aide d'un composé fixateur d'acide, procédé caractérisé en ce qu'on utilise comme colorant un composé répondant à la formule (1) selon une ou plusieurs des revendications 1 à 6.

**Revendications pour l'Etat contractant suivant : ES**

**1.** Procédé pour préparer un composé disazoïque répondant à la formule générale (1) :

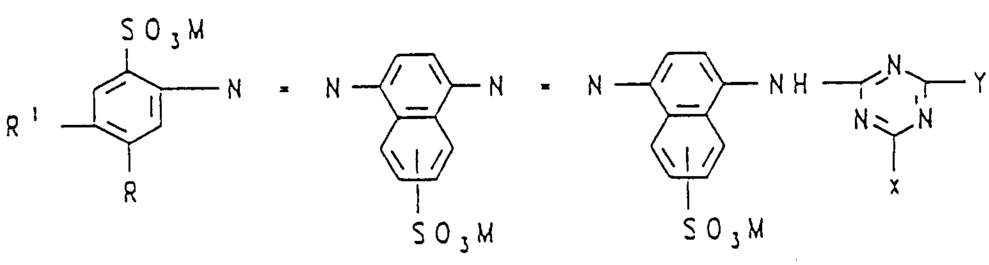

(1)

[dans laquelle :
R représente un atome d'hydrogène ou un groupe sulfo;
$R^1$ représente le groupe hydroxy, le groupe méthoxy ou le groupe éthoxy;
M représente un atome d'hydrogène ou un métal alcalin;
X représente un atome de chlore ou un atome de fluor;
Y représente un atome de chlore ou un atome de fluor],
caractérisé en ce qu'on fait réagir, avec séparation d'une mole d'un halogénure d'hydrogène, un composé amino-disazoïque de formule générale (3)

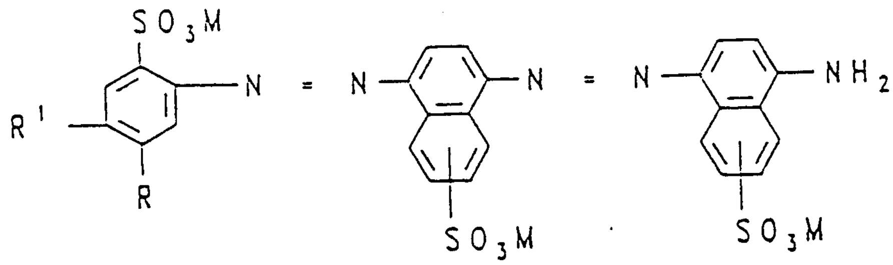

(3)

(dans laquelle R, $R^1$ et M ont les sens indiqués ci-dessus) avec une halogéno-triazine de formule générale (4)

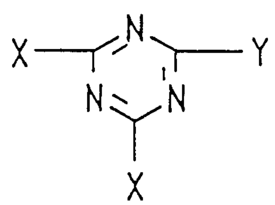

(4)

(dans laquelle X et Y ont les sens précités).

**2.** Procédé selon la revendication 1, caractérisé en ce que X et Y représentent chacun un atome de chlore.

**3.** Procédé selon la revendication 1 ou 2, caractérisé en ce que $R^1$ représente le groupe méthoxy.

**4.** Procédé selon l'une au moins des revendications 1 à 3, caractérisé en ce que R représente un atome d'hydrogène.

**5.** Procédé pour teindre de la matière fibreuse contenant des groupes hydroxy et/ou carboxamides, selon lequel on applique un colorant sur la matière et on l'y fixe à l'aide de la chaleur ou à l'aide d'un composé de fixation d'acide, procédé caractérisé en ce qu'on utilise comme colorant un composé répondant à la formule (1) selon une ou plusieurs des revendications 1 à 4.